# EUROPÄISCHE PATENTSCHRIFT

(11) **EP 1 071 592 B1**
(45) Veröffentlichungstag und Bekanntmachung des Hinweises auf die Patenterteilung: **27.10.2004**
(21) Anmeldenummer: 00908993.9
(22) Anmeldetag: 04.02.2000
(51) Int. Cl.: B60S 1/52

(54) **SCHEIBENWISCHER**
WINDSCREEN WIPER
ESSUIE-GLACE

(30) Priorität: 15.02.1999 DE 19906197
(43) Veröffentlichungstag der Anmeldung: 31.01.2001
(73) Patentinhaber: ROBERT BOSCH GMBH, 70442 Stuttgart (DE)
(72) Erfinder: ZIMMER, Joachim, D-77880 Sasbach (DE); WEGNER, Norbert, D-77815 Bühl (DE)
(86) Internationale Anmeldenummer: PCT/DE2000/000356
(87) Internationale Veröffentlichungsnummer: WO 2000/048878

(56) Entgegenhaltungen:
- EP-A- 0 667 267
- GB-A- 795 483
- GB-A- 2 223 424
- US-A- 5 433 382

## Beschreibung

### Stand der Technik

Die Erfindung geht von einem Scheibenwischer nach dem Oberbegriff des Anspruchs 1, wie z.B. aus GB-795 483 bekannt ist, aus.

Bekannte Scheibenwischer besitzen einen Wischarm, der aus einem Befestigungsteil und einem über ein Abklappgelenk daran angelenkten Gelenkteil mit einer Wischstange aufgebaut ist. Ein hakenförmiges Ende der Wischstange greift in einen Einhängekasten eines Wischblatts, der von zwei Seitenwangen eines Mittelbügels gebildet wird, und umfaßt einen Gelenkbolzen. Das so gebildete Gelenk führt das Wischblatt während der Schwenkbewegung über die Fahrzeugscheibe. Das Wischblatt besitzt ein in der Regel mehrgliederiges Tragbügelsystem mit an dem Mittelbügel angelenkten, untergeordneten Bügeln, von denen zumindest einige mit Krallen an ihren Enden eine Wischleiste an deren Kopfleiste halten. Das mehrgliederige Tragbügelsystem und in die Kopfleiste eingelegte Federschienen ermöglichen, daß sich beim Wischen die Wischleiste mit einem gleichmäßigen Auflagedruck einer gebogenen Windschutzscheibe anpaßt. Zu diesem Zweck spannt eine Zugfeder das Abklappgelenk vor. Der Wischarm ist mit seinem Befestigungsteil auf einer Antriebswelle befestigt und wird bei der Wischbewegung von dieser angetrieben.

Solche Scheibenwischer sind z.B. aus der DE 37 44 237 Al bekannt. Bei vereinfachten Ausführungen können untergeordnete Bügel, auch Zwischenbügel und Krallenbügel genannt, entfallen. Im einfachsten Fall besitzt der Mittelbügel selbst Krallen, mit denen er die Wischleiste hält.

Scheibenwaschanlagen für Fahrzeuge werden in der Regel in Verbindung mit Scheibenwischern verwendet. Sie werden betätigt, wenn die Feuchtigkeit durch Niederschläge nicht ausreicht, um die Fahrzeugscheibe zu säubern. Sie beinhalten einen Wasserbehälter, Spritzdüsen und eine Pumpe, die Wasser, dem unter Umständen Reinigungs- und Antigefriermittel beigemischt sind, mit Druck aus dem Wasserbehälter über Wasserleitungen zu den Spritzdüsen fördert. In der Regel sind die Spritzdüsen an einem Teil einer Fahrzeugkarosserie befestigt, beispielsweise an einer Motorhaube, einem Fensterrahmen oder dgl. Um zu verhindern, daß die Spritzdüsen bei Temperaturen unter dem Gefrierpunkt einfrieren, sind in den Spritzdüsen Heizelemente integriert, die über außen liegende Stecker mit einer Stromversorgung verbunden sind. Die Heizelemente erfordern einen relativ hohen Fertigungsaufwand für die Spritzdüsen und einen großen Montageaufwand, um die elektrischen Leitungen zu verlegen und die Stecker zu kontaktieren.

Es ist bereits bekannt, Spritzdüsen als zusätzliche Bauteile am Wischblatt zu befestigen und somit das Spritzwasser direkt mit kurzer Strahllänge auf den Wischbereich zu verteilen. Da das Spritzwasser auf einen Bereich in der Nähe des Wischblatts konzentriert ist und durch die Wischbewegung in kürzester Zeit wieder abgewischt wird, ist die Sicht durch das aufgebrachte Spritzwasser nur kurzzeitig behindert. Ein Nachteil solcher Systeme ist, daß Witterungseinflüsse, insbesondere Hagel und extreme Sonneneinwirkung die flexiblen Teile dieser Anordnung, die zum Überbrücken der gelenkigen Bereiche zwischen Wischarm und Wischblatt notwendig sind, stark beeinflussen. Ferner frieren die Spritzdüsen und Wasserleitungen, die dem Fahrtwind ausgesetzt sind, bei Temperaturen unter dem Gefrierpunkt schnell zu, wenn nicht genügend Antigefriermittel dem Wasser zugemischt ist. Die eingefrorenen Wasserleitungen und Spritzdüsen sind in der Regel nur mit großem Aufwand wieder aufzutauen.

In einer älteren Patentanmeldung, DE 198 15 171.3, ist ein Wischarm beschrieben, an dessen Gelenkteil bzw. an einer mit dem Gelenkteil einstückig verbundenen Wischstange Spritzdüsen angeordnet sind. Diese befinden sich in einem Düsenkörper, der in einer Ausbuchtung des Gelenkteils mit einer Spritzöffnung für den Spritzstrahl untergebracht oder in einer seitlichen Halterung an der Wischstange nach unten vorstehend eingeklipst ist. Es können auch zwei Düsenkörper vorgesehen werden, die durch ein starres oder flexibles Verbindungsstück miteinander verbunden sind. Die Düsenkörper sind leicht austauschbar und gegenüber Umwelteinflüssen gut geschützt.

Zweckmäßigerweise hat die Spritzdüse ein nach außen hin öffnendes Rückschlagventil, das verhindert, daß die Wasserleitung sich bei längerer Nichtbenutzung der Waschanlage entleert oder Wasser beim Wischbetrieb ohne Waschfunktion austritt, insbesondere bei hohen Wischfrequenzen und/oder hubgesteuerten Wischarmen. Ferner besteht die Gefahr, daß Waschwasser im Bereich der Spritzdüse, vor allem bei einer beheizten Spritzdüse, verdunstet und sich die Spritzdüse durch Ablagerungen verengt oder zusetzt.

In die Scheibenwaschanlage ist eine Heizeinrichtung integriert, die drahtförmig durch eine Wasserzuführung geführt und im Düsenkörper als Heizwendel ausgebildet ist. Die Heizeinrichtung paßt nur für einen Typ von Scheibenwischern, so daß eine große Anzahl von verschiedenen Heizeinrichtungen vorrätig gehalten werden müssen. Im übrigen ergeben sich einfache Lösungen, indem die Düsenkörper einstückig miteinander verbunden und als Spritzgußteil aus Kunststoff hergestellt sind. Durch die am Wischarm verteilten Düsenkörper wird das Spritzwasser gut über den Wischbereich verteilt, insbesondere wenn ein Spritzstrahl in einen unteren Bereich direkt vor das Wischblatt gelenkt wird. Da sich durch die Anordnung kurze Strahllängen ergeben, kann der Fahrtwind selbst bei höherer Fahrgeschwindigkeit die Spritzwasserverteilung nur wenig beeinflussen.

### Vorteile der Erfindung

Nach der Erfindung ist in einem Gehäuse ein Düsenkörper mit einem Einlaßkanal und mindestens einem Auslaßkanal eingelassen. Der Einlaßkanal geht von einer zum Wasserzulauf weisenden Stirnseite aus und mündet an einer Mantelfläche des Düsenkörpers, während der Auslaßkanal in einem Abstand vom Einlaßkanal von der Mantelfläche ausgeht und in einem zur Spritzdüse führenden Spritzkanal mündet. Eine Membran verschließt im drucklosen Zustand den Einlaßkanal und den Auslaßkanal. Dieser kann nahe an der Spritzdüse liegen, so daß nur ein kleines Wasservolumen zwischen der Membran und der Spritzdüse gelagert ist und unkontrolliert ausfließen oder verdunsten kann.

Die Membran ist als eine Ringfedermembran oder vorteilhaft in einfacher Weise als eine gummielastische Schlauchmembran ausgebildet, die an ihren Enden Wülste aufweist. Diese sind in Ringnuten des Düsenkörpers eingebettet. Beim Einströmen des Wassers auf der Einlaßseite wird die Membran aufgeweitet, gibt den Einlaßkanal und den Auslaßkanal frei und stützt sich außen am Gehäuse ab.

Um zum Öffnen nur den Umgebungsdruck und die Vorspannung der Membran überwinden zu müssen, befindet sich am Düsengehäuse eine Entlüftungsbohrung. Der Öffnungsdruck der Membran ist gering, so daß das System mit relativ geringer Pumpenleistung betrieben werden kann.

Der Düsenkörper kann leicht aus Kunststoff durch Spritzgießen hergestellt werden. Sein Außendurchmesser verkleinert sich zwischen den Ringnuten an beiden Enden, so daß die Schlauchmembran an ihren Enden dichtend zwischen dem Gehäuse und dem Düsenkörper gehalten ist, aber im Bereich des Einlaßkanals und Auslaßkanals genügend radialen Spielraum hat, um ausreichend große Strömungsquerschnitte freigeben zu können. Dabei bleibt die äußere, glatte, zylindrische Kontur erhalten. Um die Spritzdüse ausrichten zu können, besitzt sie eine kugelförmige Außenkontur, mit der sie in einen Kugelsitz des Düsenkörpers gepreßt ist. Diese Ausführung des Düsenkörpers bietet den Vorteil einer kompakten Bauweise und damit geringerer Kosten.

Damit die Spritzdüse und das Ventil auch für den Winterbetrieb tauglich sind, werden sie beheizt. Die Heizleitung führt vorteilhafterweise durch den Wasserzulauf und durch eine Bohrung des Düsenkörpers bis in die Nähe der Spritzdüse. Im Düsenkörper ist die Heizleitung eingelötet, eingeklebt oder eingeklemmt. Die Membran schließt den Wasserraum nach außen ab und verhindert somit, daß das erwärmte Wasser verdunstet und die Spritzdüsen verkalken.

Mit Hilfe der Membran wird das Wasser während der Ruheintervalle im System zurückgehalten. So kann das Waschwasser bei getaktetem Sprühen im richtigen Moment vor das Wischblatt gespritzt werden. Um die Sicht des Fahrers nicht zu behindern, spritzt das Wasser während der Aufwärtsbewegung der Wischarme, jedoch darf beim Abwärtswischen kein Wasser nachtropfen.

Ein geringeres Bauvolumen des gesamtem Ventils ergibt sich dadurch, daß Wasser- und Energieversorgung in einem Element integriert sind und ein elektrisches Kontaktieren der Heizung und der Düse entfällt.

Bei diesem Ventil wird eine gute Energieübertragung erreicht, da ein geringer Abstand zwischen dem Wasserkanal und der Spritzdüse besteht, beziehungsweise die Spritzdüse im Kanal angeordnet ist. Die Herstellung des Düsenkörpers aus Kunststoff ergibt eine Wärmeisolierung nach außen, so daß sich die Wärmeabgabe insbesondere auf die Spritzdüse und das Wasser konzentriert. Dies führt zu einem geringeren Energieverbrauch.

Das erwärmte Wasser verbessert die Reinigungswirkung, so daß der Wasserverbrauch und besonders der Verbrauch von umweltschädlichen Zusätzen verringert werden kann. Die Reinigungswirkung kann auch durch mehrere Spritzdüsen verbessert werden, die am Wischarm in einem Abstand von einigen Zentimetern zueinander angeordnet sind.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines erfindungsgemäßen Scheibenwischers,
- Fig. 2: einen teilweisen Längsschnitt durch ein Ventil mit Spritzdüse im geschlossenen Zustand,
- Fig. 3: einen teilweisen Längsschnitt durch ein Ventil mit Spritzdüse im geöffneten Zustand und
- Fig. 4: eine Explosionszeichnung eines Ventils mit einer Düse und zwei Membranausführungen.

### Beschreibung der Ausführungsbeispiele

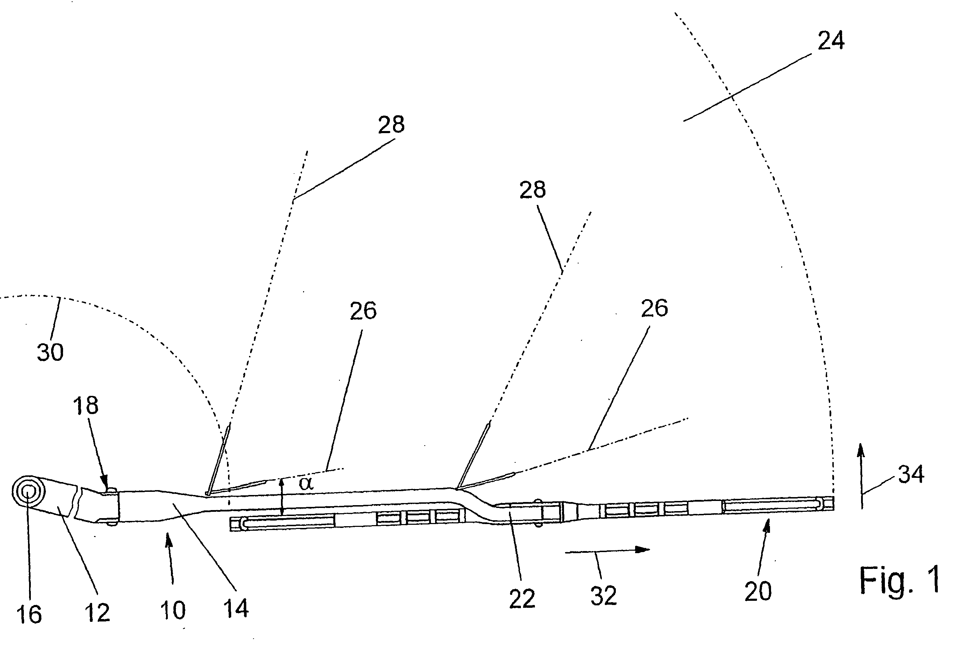

Der Scheibenwischer nach Fig. 1 besitzt einen Wischarm 10, der aus einem Befestigungsteil 12 und aus einem Gelenkteil 14 mit einer Wischstange 22 aufgebaut ist. Das Befestigungsteil 12 besitzt eine Aufnahmebohrung 16, mit der es auf einer nicht dargestellten Antriebswelle befestigt ist. Das Gelenkteil 14 ist über ein Abklappgelenk 18 an dem Befestigungsteil 12 angelenkt und über einen hier nicht näher beschriebenen Federmechanismus vorgespannt. Der Federmechanismus drückt einerseits das Wischblatt 20 über den Wischarm 10 gegen eine Fahrzeugscheibe und hält andererseits das Gelenkteil 14 mit der Wischstange 22 in einer abgeklappten Stellung, um das Wischblatt 20 reinigen oder wechseln zu können.

Das Gelenkteil 14 und die angeformte Wischstange 22 haben ein offenes u-förmiges Profil, in das von unten ein Gehäuse 36 mit einem eingebauten Düsenkörper 40 und einer Spritzdüse 64 eingesetzt ist. Mehrere Spritzdüsen 64 sind im Abstand zueinander am Wischarm 10 angebracht. Eine solche Anordnung ermöglicht es, daß während der Aufwärtsbewegung des Wischarms 10 Waschwasser in Startrichtung 34 vor dem Wischblatt 22 auf den Bereich des Wischfeldes 24 verteilt wird. Das Wasser kann in Form zweier Spritzstrahlen 26 oder 28 austreten. Dabei ist der Spritzstrahl 26 so ausgerichtet, daß er einen geringen Winkel α mit dem Wischblatt 20 einschließt, während der Spritzstrahl 28 den Bereich versorgt, der in Startrichtung 34 weiter vor dem Wischblatt 26 liegt.

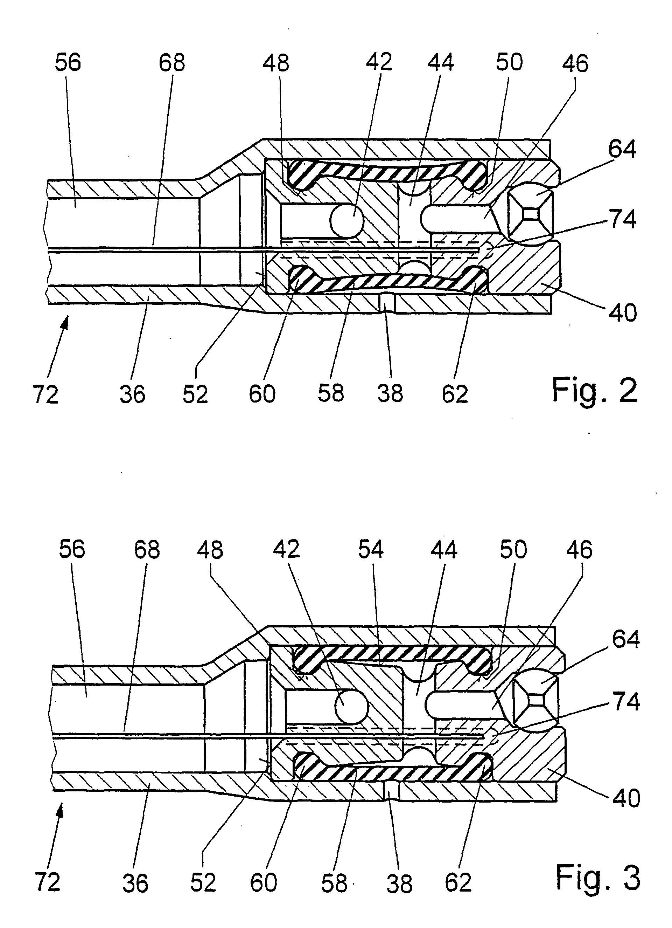

Fig. 2 zeigt das Ventil 72 im geschlossenen Zustand und Fig. 3 den geöffneten Zustand. Durch aufbringen eines Pumpendrucks strömt Wasser von einem Wasserzulauf 56 durch den Einlaßkanal 42 und weitet eine Schlauchmembran 58, so daß es über den Auslaßkanal 44 zu einem Spritzkanal 46 und letztendlich durch eine Spritzdüse 64 nach außen gelangt. Der Einlaßkanal 42 geht von einer zum Wasserzulauf 56 weisenden Stirnseite 52 aus und mündet an einer Mantelfläche 54 des Düsenkörpers 40, während der Auslaßkanal 44 in einem Abstand vom Einlaßkanal 42 von der Mantelfläche 54 ausgeht und in einem zu einer Spritzdüse 64 führenden Spritzkanal 46 mündet.

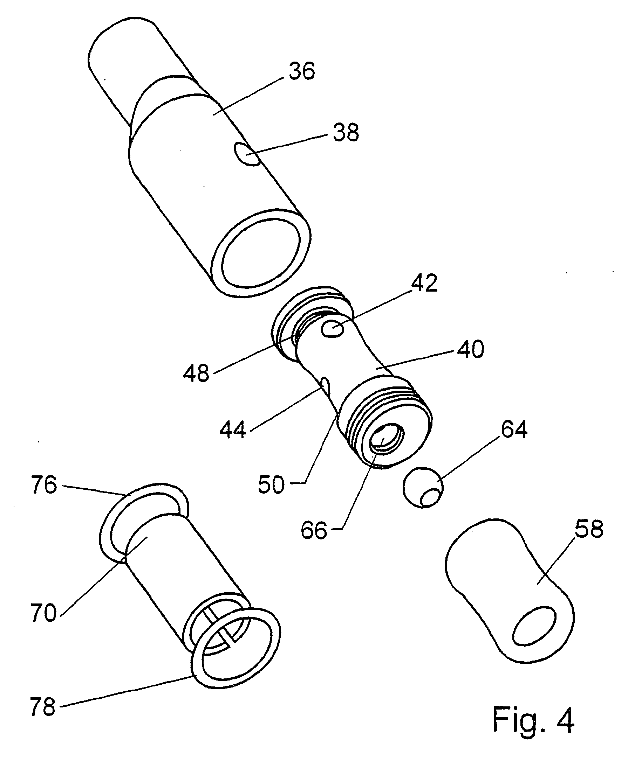

Beim Wasseraustritt im geöffneten Zustand des Ventils 72 stützt sich die Schlauchmembran 58 an dem Gehäuse 36 ab, welches am Umfang mindestens eine Entlüftungsbohrung 38 aufweist. Im geschlossenen Zustand des Ventils 72 liegt die Schlauchmembran 58 unter Eigenspannung am Düsenkörper 40 an. Sie schließt den Einlaßkanal 42 und Auslaßkanal 44 und trennt sie somit voneinander. Die Schlauchmembran 58 besteht aus einem Elastomer und hat an ihren Enden Wülste 60 und 62, die in die Ringnuten 48 und 50 des Düsenkörpers 40 eingebettet sind und den Düsenkörper 40 an seinen Enden am Umfang gegenüber dem Gehäuse 36 abdichten. So kann auf zusätzliche Dichtmittel verzichtet werden. Anstelle der Schlauchmembran 58 kann auch eine geschlitzte Ringfedermembran 70 zwischen zwei Dichtringen 76, 78 angeordnet werden (Fig. 4). Damit sie sicher den Einlaßkanal 42 und den Auslaßkanal 44 verschließt, ist die Ringfedermembran 70 zweckmäßigerweise gegen Verdrehen fixiert.

Der Düsenkörper 40, der zweckmäßigerweise einstückig ausgebildet ist, ist als Spritzgußteil aus Kunststoff hergestellt. Dadurch ist das Wasser im Düsenkörper 40 wärmeisoliert, so daß auch bei niedrigen Temperaturen nur eine geringe Heizleistung erforderlich ist. Im hier nicht näher beschriebenen Spritzgießverfahren wird ein Kugelsitz 66 mit späterer Zwangsentformung eingespritzt, welcher dann eine Spritzdüse 64 aufnimmt. Der Außendurchmesser des Düsenkörpers 40 verkleinert sich zu den Ringnuten 48 und 50, so daß zwischen ihm und dem Gehäuse 36 Spielraum für die Bewegung der Schlauchmembran 58 vorhanden ist.

Eine Spritzdüse 64 wird mit einem Kugelsitz 66 im Düsenkörper 40 gehalten und besteht aus einem gut wärmeleitenden Werkstoff, z.B. Metall, was eine gute Wärmeübertragung vom Wasser auf die Spritzdüse 64 ermöglicht.

Eine Heizleitung 68 (Fig. 2, 3) führt durch den Wasserzulauf 56 zu einer Bohrung 74 des Düsenkörpers 40. Die Bohrung 74 reicht bis in die Nähe der Spritzdüse 64. In der Bohrung 74 ist die Heizleitung 68 eingelötet, eingeklebt oder eingeklemmt. Eine solche innen liegende Heizung und eine günstige Auswahl der eingesetzten Werkstoffe für die verwendeten Bauteile ergeben ein kleines Bauvolumen, Energie- und Kosteneinsparungen.

## Patentansprüche

1. Scheibenwischer mit einem Wischarm (10), der über eine Antriebswelle angetrieben wird und an dem ein Wischblatt (20) angelenkt ist, wobei mindestens eine Spritzdüse (64) an einem schwenkbaren Teil (10, 22) angeordnet ist, die über einen Wasserzulauf (56) mit einer Wasserpumpe verbunden ist, **dadurch gekennzeichnet, daß** in einem Gehäuse (36) ein Düsenkörper (40) mit einem Einlaßkanal (42) und mindestens einem Auslaßkanal (44) eingelassen ist, wobei der Einlaßkanal (42) von einer zum Wasserzulauf (56) weisenden Stirnseite (52) ausgeht und an einer Mantelfläche (54) des Düsenkörpers (40) mündet, während der Auslaßkanal (44) im Abstand vom Einlaßkanal (42) von der Mantelfläche (54) ausgeht und in einem zur Spritzdüse (64) führenden Spritzkanal (46) mündet, und wobei eine Membran (58, 70) im drucklosen Zustand den Einlaßkanal (42) und den Auslaßkanal (44) verschließt.

2. Scheibenwischer nach Anspruch 1, **dadurch gekennzeichnet, daß** die Membran eine gummielastische Schlauchmembran (58) ist.

3. Scheibenwischer nach Anspruch 2, **dadurch gekennzeichnet, daß** die Schlauchmembran (58) an ihren Enden Wülste (60, 62) aufweist, die in Ringnuten (48, 50,) des Düsenkörpers eingebettet sind.

4. Scheibenwischer nach einem der Ansprüche 2 oder 3, **dadurch gekennzeichnet, daß** eine Entlüftungsbohrung (38) am Umfang der Schlauchmembran (58) im Gehäuse (36) vorgesehen ist.

5. Scheibenwischer nach einem der Ansprüche 2 bis 4, **dadurch gekennzeichnet, daß** sich die Schlauchmembran (58) nach einem vorgegebenen Öffnungshub an einer Wand des Gehäuses (36) abstützt.

6. Scheibenwischer nach einem der Ansprüche 2 bis 5, **dadurch gekennzeichnet, daß** sich der Außendurchmesser des Düsenkörpers (40) im Bereich zwischen den Enden der Schlauchmembran (58) verkleinert.

7. Scheibenwischer nach einem der vorhergehenden Ansprüche, **dadurch gekennzeichnet, daß** die Spritzdüse (64) mit einem Kugelsitz (66) im Düsenkörper (40) gehalten ist.

8. Scheibenwischer nach Anspruch 7, **dadurch gekennzeichnet, daß** der Düsenkörper (40) aus Kunststoff durch Spritzgießen hergestellt und der Kugelsitz (66) eingespritzt ist.

9. Scheibenwischer nach einem der vorhergehenden Ansprüche, **dadurch gekennzeichnet, daß** eine Heizleitung (68) durch den Wasserzulauf (56) und durch eine Bohrung (74) des Düsenkörpers (40) bis in die Nähe der Spritzdüse (64) geführt und in der Bohrung (74) befestigt ist.

10. Scheibenwischer nach Anspruch 9, **dadurch gekennzeichnet, daß** die Heizleitung (68) im Düsenkörper (40) eingelötet, eingeklebt oder eingeklemmt ist.

## Claims

1. Wiper having a wiper arm (10) which is driven via a drive shaft and to which a wiper blade (20) is coupled, at least one spray nozzle (64) being arranged on a pivotable part (10, 22) and being connected to a water pump via a water intake (56), **characterized in that** a nozzle body (40) having an inlet duct (42) and at least one outlet duct (44) is embedded in a housing (36), the inlet duct (42) emerging from an end side (52) pointing towards the water intake (56), and opening out on a circumferential surface (54) of the nozzle body (40) while the outlet duct (44) emerges from the circumferential surface (54) at a distance from the inlet duct (42) and opens out in a spray duct (46) leading to the spray nozzle (64), and, in the unpressurized state, a diaphragm (58, 70) closing the inlet duct (42) and the outlet duct (44).

2. Wiper according to Claim 1, **characterized in that** the diaphragm is an elastomeric tubular diaphragm (58).

3. Wiper according to Claim 2, **characterized in that** at its ends the tubular diaphragm (58) has beads (60, 62) which are embedded in annular grooves (48, 50) of the nozzle body.

4. Wiper according to either of Claims 2 and 3, **characterized in that** a vent hole (38) is provided in the housing (36) on the circumference of the tubular diaphragm (58).

5. Wiper according to one of Claims 2 to 4, **characterized in that** the tubular diaphragm (58) is supported after a predefined opening stroke on a wall of the housing (36).

6. Wiper according to one of Claims 2 to 5, **characterized in that** the outside diameter of the nozzle body (40) is reduced in the region between the ends of the tubular diaphragm (58).

7. Wiper according to one of the preceding claims, **characterized in that** the spray nozzle (64) is held in the nozzle body (40) by a ball seat (66).

8. Wiper according to Claim 7, **characterized in that** the nozzle body (40) is produced from plastic by injection moulding and the ball seat (66) is injected.

9. Wiper according to one of the preceding claims, **characterized in that** a heating line (68) is guided through the water intake (56) and through a hole (74) in the nozzle body (40) into the vicinity of the spray nozzle (64) and is fastened in the hole (74).

10. Wiper according to Claim 9, **characterized in that** the heating line (68) is soldered, bonded or clamped in the nozzle body (40).

## Revendications

1. Essuie-glace avec un bras d'essuie-glace (10) entraîné par un arbre d'entraînement et articulé sur une raclette d'essuie-glace (20), au moins un gicleur (64) étant disposé sur une pièce oscillante (10, 22) reliée à une pompe à eau par une amenée d'eau (56),
**caractérisé en ce qu'**
un corps de buse (40) est introduit dans un boîtier (36) avec un conduit d'admission (42) et au moins un conduit d'échappement (44), le conduit d'admission (42) partant d'une surface frontale (52) tournée vers l'amenée d'eau (56) et débouchant sur une surface latérale (54) du corps de buse (40) tandis que le conduit d'échappement (44) part de la surface latérale (54) à une certaine distance du conduit d'admission (42) et débouche dans un conduit de pulvérisation (46) conduisant au gicleur (64), et une membrane (58, 70) ferme le conduit d'admission (42) et le conduit d'échappement (44) à l'état exempt de pression.

2. Essuie-glace selon la revendication 1,
**caractérisé en ce que**
la membrane est une membrane tubulaire (58) en gomme élastique.

3. Essuie-glace selon la revendication 2,
**caractérisé en ce que**
la membrane tubulaire (58) présente au niveau de ses extrémités des renflements (60, 62) qui sont encastrés dans des rainures annulaires (48, 50) du corps de buse.

4. Essuie-glace selon l'une quelconque des revendications 2 ou 3,
**caractérisé en ce qu'**
un alésage d'aération (38) est prévu à la périphérie de la membrane tubulaire (58) dans le boîtier (36).

5. Essuie-glace selon l'une quelconque des revendications 2 à 4,
**caractérisé en ce que**
la membrane tubulaire (58) s'appuie contre une paroi du boîtier (36) suivant une course d'ouverture prédéterminée.

6. Essuie-glace selon l'une quelconque des revendications 2 à 5,
**caractérisé en ce que**
le diamètre extérieur du corps de buse (40) se réduit dans la zone comprise entre les extrémités de la membrane tubulaire (58).

7. Essuie-glace selon l'une quelconque des revendications précédentes,
**caractérisé en ce que**
le gicleur (64) est maintenu par un logement à bille (66) dans le corps de buse (40).

8. Essuie-glace selon la revendication 7,
**caractérisé en ce que**
le corps de buse (40) est fabriqué en matière plastique par moulage par injection et le logement à bille (66) est injecté.

9. Essuie-glace selon l'une quelconque des revendications précédentes,
**caractérisé en ce qu'**
une conduite de chaleur (68) est guidée jusqu'à proximité du gicleur (64) par l'amenée d'eau (56) et par un alésage (74) du corps de buse (40) et est fixée dans l'alésage (74).

10. Essuie-glace selon la revendication 9,
**caractérisé en ce que**
la conduite de chaleur (68) est soudée, collée ou coincée dans le corps de buse (40).
